# DEMANDE DE BREVET EUROPEEN

(11) **EP 1 325 830 A1**
(43) Date de publication de la demande: **09.07.2003**
(21) Numéro de dépôt: 02360364.0
(22) Date de dépôt: 20.12.2002
(51) Int. Cl.: B60K 15/04, B60K 15/035

(54) **Dispositif antivol et anti-déversement pour réservoir de liquide, notamment réservoir de carburant**

(30) Priorité: 21.12.2001 FR 0116761
(71) Demandeur: Mougenot, Philippe, 88560 Saint Maurice sur Moselle (FR)
(72) Inventeur: Mougenot, Philippe, 88560 Saint Maurice sur Moselle (FR)
(74) Mandataire: Metz, Paul

(57) **Abrégé**

Le dispositif antivol et anti-déversement (1) est un corps tubulaire plongeur (8), maintenu en position entre le fond (3) du réservoir (2) et la structure intérieure de sous-face de l'orifice de sortie (7). Un patin d'appui et de calage (12) assure l'immobilisation de l'ensemble entre l'orifice de remplissage (7) et le fond (3) du réservoir (2).

Le corps tubulaire plongeur (8) se compose de deux enveloppes cylindriques (19) et (20) présentant des ouvertures et délimitant entre elles un espace annulaire (21) dans lequel vient se ranger un tube escamotable de remplissage (22).

L'enveloppe interne (19) renferme un dispositif anti-pénétration (33) doublé d'un clapet anti-déversement (34) à flotteur.

Cette invention intéresse principalement les constructeurs de véhicules utilitaires et les exploitants de flottes de véhicules terrestres et engins de chantier.

## Description

La présente invention concerne un dispositif antivol et anti-déversement pour réservoir de liquide.

Le but de l'invention est de fournir un dispositif antivol et anti-déversement en complément des bouchons de réservoir simples et traditionnels. Ce dispositif doit empêcher le siphonnage du réservoir qui en est équipé ainsi que toute tentative frauduleuse visant à prélever du carburant ou un autre liquide dans un réservoir. Pour des raisons de sécurité, ce dispositif est également prévu pour éviter le déversement du liquide contenu dans le réservoir en cas de perte du bouchon, ainsi que le débordement du liquide lors de son remplissage.

Ce dispositif peut être installé aisément dans n'importe quel type de réservoir de liquide et se monter dans celui-ci sans qu'il soit nécessaire de le modifier.

Il est particulièrement bien adapté pour équiper les réservoirs de carburant des véhicules automobiles et des camions.

Pour résoudre ces problèmes techniques, divers bouchons de réservoir ont été proposés. On connaît par exemple des dispositifs anti-intrusion permettant d'empêcher l'introduction d'un conduit destiné à siphonner le réservoir.

On connaît également de nombreux bouchons de sécurité étanches condamnant l'accès au réservoir par un verrouillage à clef. Généralement, ce dernier type de dispositif n'empêche nullement le siphonnage du réservoir une fois le bouchon fracturé et il ne présente aucune fonction anti-débordement.

Ainsi, par les brevets US n° 4,630,748 au nom de RUSSELL D. KELLER et US n° 5,476,185 au nom de SNYDER TANK CORPORATION, on connaît un dispositif de remplissage anti-siphonnage constitué principalement d'un tube fixé sur l'ouverture du réservoir et plongeant dans ce dernier. Des ouvertures latérales sur ce tube permettent le passage du liquide et donc le remplissage du réservoir mais interdisent l'introduction d'un tube ou d'un autre moyen permettant de prélever frauduleusement du liquide. Cependant, ce dispositif ne s'adapte pas aisément à n'importe quel type de réservoir et il ne présente aucune fonction anti-déversement ou anti-débordement.

Un bouchon de sécurité interdisant l'accès au réservoir par un simple verrouillage est divulgué dans le brevet US n° 5,533,766 au nom de WEBASTON KAROSSERIESYSTEME GMBH. Cependant, il n'empêche pas le siphonnage du réservoir une fois l'ouverture de ce dernier déverrouillée ou fracturée. En outre, ces dispositifs sont enlevés pour le remplissage du réservoir, ils n'agissent donc en rien contre le débordement.

Pour résoudre ce problème technique, le dispositif selon l'invention comporte un corps tubulaire plongeur maintenu immobilisé en position entre le fond du réservoir et la structure intérieure supérieure de l'orifice de sortie par calage d'appui sur le fond du réservoir et contre la sous-face de l'extrémité du goulot de l'orifice du réservoir.

Le corps comporte deux enveloppes coaxiales, une enveloppe interne et une enveloppe externe, formant un ensemble tubulaire plongeur. Les enveloppes délimitent entre elles un espace annulaire dans lequel vient se ranger un tube escamotable de remplissage permettant le remplissage à ras bord et rendant impossible le prélèvement frauduleux de la quantité occupant le volume supérieur.

Ces enveloppes, préférentiellement cylindriques, présentent des ouvertures transversales afin de laisser passer le liquide vers le réservoir lors du remplissage. Elles sont réunies à l'une de leur extrémité par une paroi de fermeture. L'enveloppe interne renferme un dispositif anti-pénétration et un clapet anti-déversement, par exemple à flotteur.

Un patin d'appui et de calage assure l'immobilisation de l'ensemble entre l'orifice de remplissage et le fond du réservoir. Ainsi, par exemple, le corps tubulaire plongeur se trouve simultanément en appui d'immobilisation sur la partie intérieure du goulot de sortie du réservoir et sur le fond du réservoir par un patin ou sabot d'appui et de calage.

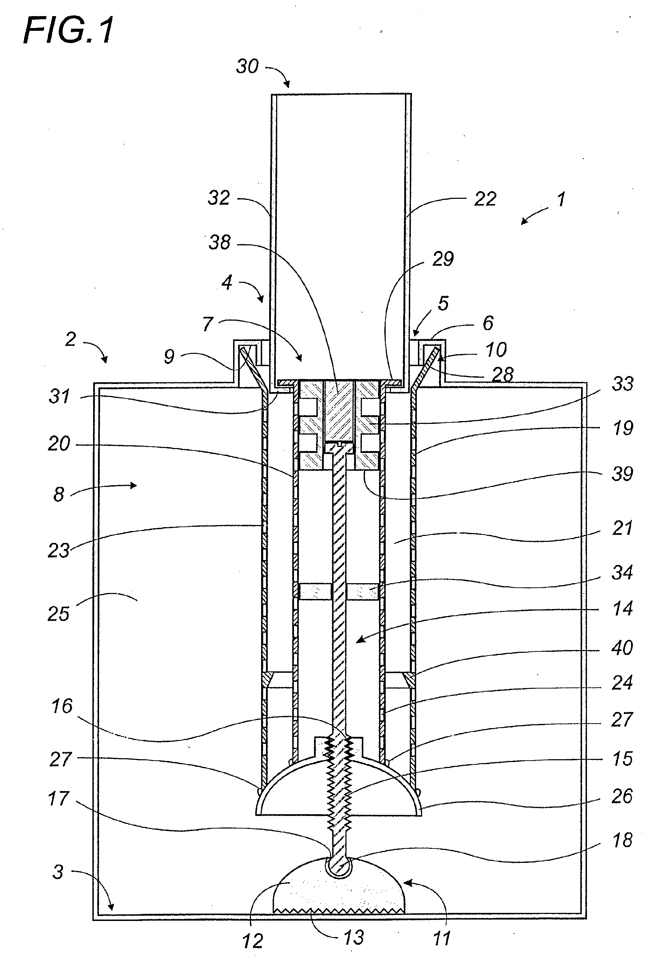

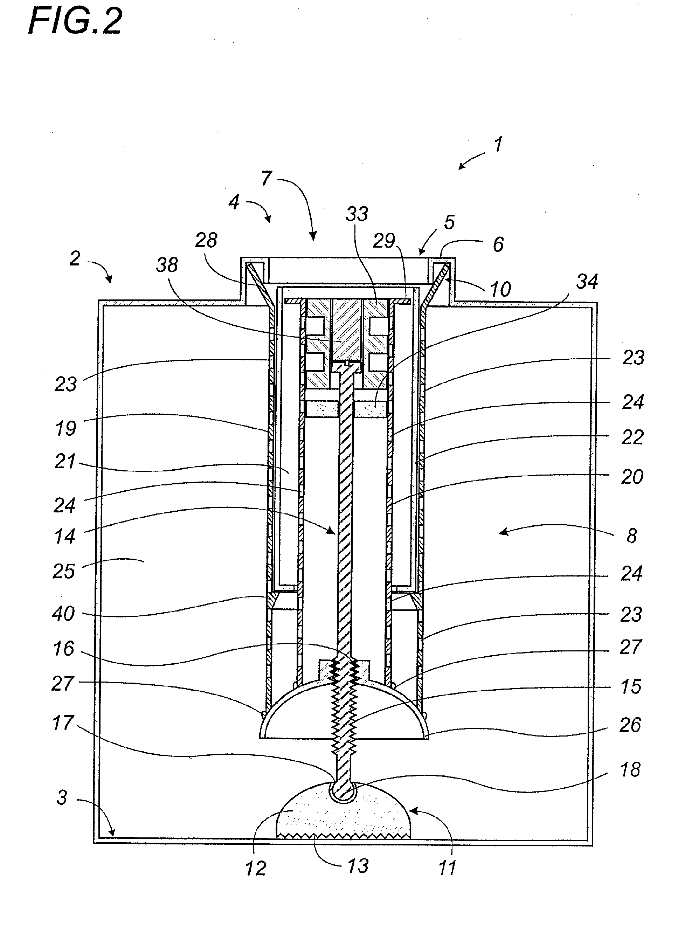

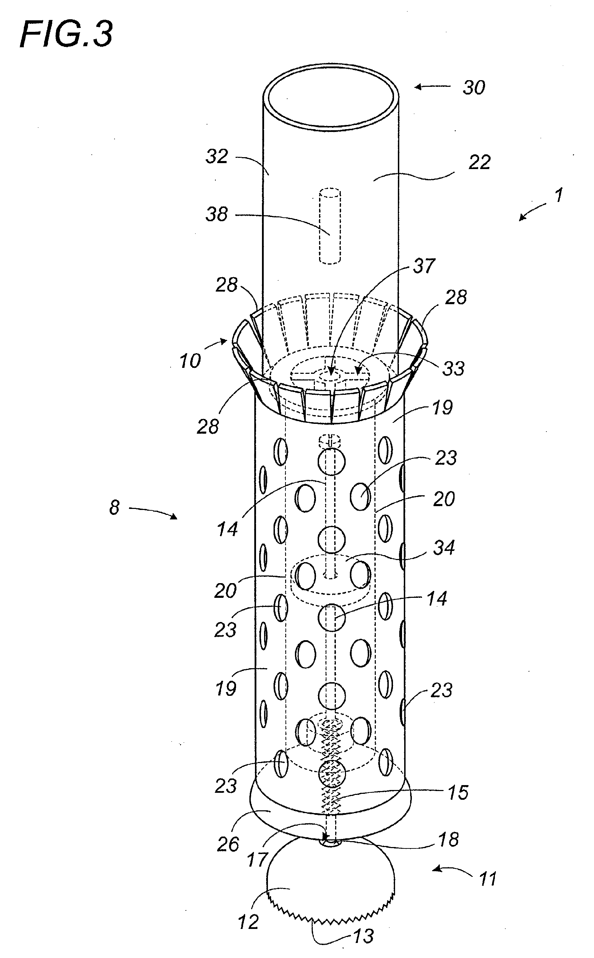

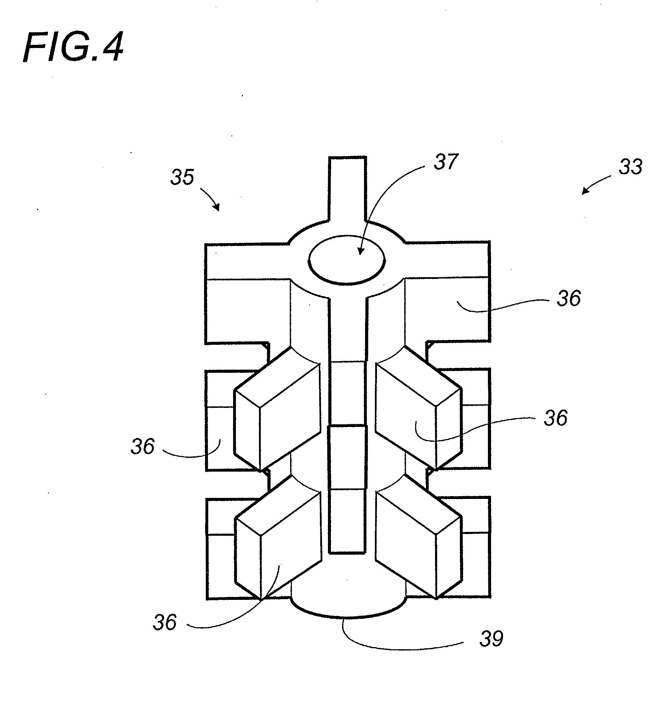

D'autres caractéristiques et avantages de l'invention apparaîtront à la lecture de la description détaillée qui va suivre, description faite en référence aux dessins annexés, dans lesquels :
. la figure 1 est une vue en coupe longitudinale du dispositif selon l'invention en position ouverte ;
. la figure 2 est une vue en coupe longitudinale du dispositif selon l'invention en position fermée ;
. la figure 3 est une vue schématique en perspective à l'état partiellement dissocié du dispositif selon l'invention ; et
. la figure 4 est une vue en perspective de l'obturateur ou dispositif anti-pénétration.

Le dispositif de sécurité selon la présente invention va maintenant être décrit de façon détaillée en référence aux figures 1 à 4. Les éléments équivalents représentés sur les différentes figures porteront les mêmes références numériques.

Sur la figure 1, on a représenté un dispositif antivol et anti-déversement 1 pour réservoir de liquide 2 en position ouverte. Ce dispositif antivol 1 est monté sur un réservoir de liquide 2 présentant un fond 3 et ajusté sur une ouverture 4 de ce dernier, par exemple au niveau d'un conduit 5 formant un goulot 6 délimitant un orifice de sortie 7.

Le dispositif de sécurité se présente sous la forme d'un corps tubulaire plongeur 8. Celui-ci est calé et maintenu immobilisé en position entre le fond 3 du réservoir 2 et une face intérieure 9 de l'orifice 7 de sortie ou du goulot 6. Ce corps tubulaire plongeur 8 présente une extrémité supérieure 10 et une extrémité inférieure 11. L'extrémité supérieure 10 arrive en appui sur la partie intérieure 9 du goulot 6 de sortie du réservoir 2. Son extrémité inférieure 11 est maintenue en appui de calage sur le fond 3 du réservoir 2 au moyen d'un patin ou sabot d'appui et de calage 12 à sous-face ou semelle 13 présentant un relief antidérapant.

Avantageusement, ce patin ou sabot d'appui et de calage 12 peut être réalisé en matière plastique.

Le patin ou sabot d'appui et de calage 12 est forcé en appui contre le fond 3 du réservoir 2 à l'aide d'une tige de serrage 14 pour assurer l'immobilisation de l'ensemble entre l'ouverture 4 et le fond du réservoir 3.

A cet effet, la tige de serrage 14 présente un filetage 15 qui vient se visser dans un filetage complémentaire 16 fixe, par exemple solidaire d'une des pièces composantes du corps tubulaire plongeur 8 ou conformé dans celle-ci.

Le filetage 15 permet d'éloigner par vissage le patin 12 du goulot de sortie 6 du réservoir 2 et donc de forcer celui-ci en appui contre le fond du réservoir.

Pour faciliter son action de calage sur le fond 3 du réservoir 2, le patin 12 peut également être relié de façon articulée à la tige de serrage 14. Pour cela, il peut par exemple présenter un logement creux semi-sphérique 17 dans sa partie supérieure, dans lequel vient s'ajuster, à la manière d'une rotule, la pièce complémentaire sensiblement sphérique 18 appartenant ou solidarisée à l'extrémité inférieure de la tige de serrage 14.

Avantageusement, la nature de la liaison à rotule pouvant exister entre la tige de serrage 14 et le patin d'appui et de calage 12 empêche le pivotement de ce dernier lors du vissage de la tige de serrage 14 et évite ainsi que le patin d'appui et de calage 12 ne change de position au moment du serrage et de la mise en pression de l'ensemble, ce qui pourrait entraîner un positionnement incorrect du dispositif 1 selon l'invention dans le réservoir 2.

Le montage et la mise en place du dispositif de sécurité 1 selon l'invention seront vus ultérieurement en référence à la figure 3.

Le corps tubulaire plongeur 8 du dispositif 1 se compose de deux enveloppes coaxiales 19, 20 formant l'ensemble tubulaire plongeur 8 délimitant entre elles un espace annulaire 21 dans lequel un tube escamotable de remplissage 22 vient se ranger.

Dans un mode de réalisation préféré, ces enveloppes 19, 20 sont de forme sensiblement cylindrique.

Ces enveloppes coaxiales 19, 20 présentent des ouvertures traversantes 23, 24 afin de laisser passer le liquide vers l'intérieur 25 du réservoir 2 lors du remplissage. Ces ouvertures 23, 24 plus ou moins grandes affectent la forme de perforations enfoncées, d'orifices percés, de fentes découpées ou enfoncées ou de toute autre forme adaptée au passage du liquide.

Ces enveloppes coaxiales 19, 20 sont maintenues entres elles par une paroi de fermeture 26 par exemple par soudure étanche 27. Avantageusement, cette paroi de fermeture 26 présente une forme adaptée pour venir s'ajuster sur la partie supérieure du patin ou sabot d'appui et de calage 12. Dans le mode de réalisation préféré, la paroi de fermeture 26 présente une forme sensiblement hémisphérique bombée vers le haut, complémentaire de la forme du patin ou sabot d'appui et de calage 12, pour servir de logement. Cette caractéristique permet avantageusement à tous les éléments constitutifs du dispositif 1 de venir s'emboîter avant sa mise en place, ce qui facilite son introduction dans le réservoir 2.

L'enveloppe externe 19, c'est-à-dire celle présentant le diamètre le plus grand, délimite avec l'enveloppe interne 20 un volume annulaire 21 dans lequel vient se loger le tube escamotable de remplissage 22. L'enveloppe externe 19 est maintenue au niveau de sa partie supérieure 10 en appui d'encastrement contre la structure intérieure 9 de sous-face de l'orifice de sortie ou du goulot 6 du réservoir 2.

Si le goulot 6 du réservoir 2 présente un rebord incurvé vers l'intérieur, il forme alors une gorge dans laquelle l'extrémité supérieure 10 de l'enveloppe externe 19 peut venir s'encastrer.

Préférentiellement, l'extrémité supérieure 10 de l'enveloppe externe 19 est évasée et arrive en appui d'encastrement contre la structure intérieure 9 de l'orifice de sortie ou du goulot 6 du réservoir 2. Selon une variante, cette partie évasée 10 se présente sous la forme d'une couronne d'ailettes inclinables 28 obtenues par découpage dans la partie supérieure 10 de l'enveloppe externe 19, comme représenté sur la figure 3.

L'appui d'encastrement est constant, provoqué par la réaction d'appui et de calage du patin ou sabot d'appui et de calage 12 sur le fond 3 du réservoir 2 à l'aide de la tige de serrage 14. Ainsi, l'extrémité supérieure évasée 10 ou en couronne d'ailettes 28 de l'enveloppe externe 19 est forcée en appui d'encastrement contre la structure intérieure 9 de sous-face de l'orifice de sortie 7 ou du goulot 6 du réservoir 2 au moyen de la tige de serrage 14 qui force l'extrémité supérieure 10 de l'enveloppe externe 19 vers le haut.

Avantageusement, l'enveloppe interne 20 peut comporter en partie supérieure un rebord d'appui 29 contre lequel le tube escamotable de remplissage 22 vient buter, par exemple de manière étanche, lorsqu'il est en position relevée, c'est-à-dire hors de son logement 21 situé entre les deux enveloppes 19, 20.

Le tube escamotable de remplissage 22 sert de guidage et de maintien du pistolet pour le remplissage du réservoir 2. Il sert surtout à permettre de maintenir l'extrémité du pistolet de remplissage au delà de l'orifice 7 pour permettre un remplissage à ras bord sans difficulté. De plus, il rend impossible l'accès au volume supérieur du réservoir proche de sa face supérieure. Il est logé entre les deux enveloppes 19, 20 de l'ensemble tubulaire de manière à être mobile le long de celles-ci. Dans un mode de réalisation préféré, il est monté coulissant dans le volume intérieur 21 délimité entre les enveloppes interne 20 et externe 19.

Dans la position ouverte du réservoir 2 représentée sur la figure 1, le tube escamotable de remplissage 22 est placé en position relevée hors de l'ensemble tubulaire. Sa partie supérieure 30 est ouverte et permet, par exemple, l'introduction et le maintien de l'extrémité d'un pistolet de distribution de liquide lors du remplissage du réservoir 2.

Préférentiellement, le tube escamotable de remplissage 22 comporte en sa partie inférieure une bague d'appui 31 pouvant s'adapter, par exemple de manière étanche, sur le corps externe de l'enveloppe interne 20. Lorsque le tube escamotable de remplissage 22 se trouve en position sortie, sa bague d'appui 31 inférieure arrive en butée contre le rebord supérieur de l'enveloppe interne 20. Ceci empêche la sortie totale du tube escamotable de remplissage 22 hors du dispositif 1 en définissant une position haute de butée.

Avantageusement, le rebord d'appui 29 et la bague d'appui 31 sont conformés de façon que l'étanchéité soit assurée entre l'enveloppe interne 20 et le tube escamotable de remplissage 22 lorsque ce dernier atteint la position de butée.

Le tube escamotable de remplissage 22 présente une surface latérale continue 32. Il est monté à coulissement, par exemple de manière étanche, dans l'enveloppe externe 20.

Préférentiellement, le tube escamotable de remplissage 22 comporte un moyen de préhension (non représenté), par exemple sous la forme d'une poignée, d'une anse ou autre, pour permettre son levage hors de son logement jusqu'à la mise en butée de sa bague d'appui 31 contre le rebord d'appui 29 de l'enveloppe interne 20 correspondant à sa position relevée.

Selon une autre variante non représentée, il peut être prévu un moyen, par exemple à ressort, provoquant automatiquement la sortie du tube escamotable de remplissage 22, par exemple lorsque le bouchon du réservoir 2 est enlevé.

Un moyen, par exemple du type quart de tour à baïonnette ou autre, permet le verrouillage du tube en position haute puis son déverrouillage.

L'enveloppe interne 20 renferme un dispositif anti-pénétration 33 et un clapet anti-déversement 34 par exemple à flotteur. Dans un mode de réalisation préféré, ce clapet anti-déversement 34 à flotteur est conformé en rondelle épaisse.

Le dispositif selon l'invention a pour but de permettre au liquide de s'écouler tout en empêchant l'introduction d'un tube, d'un tuyau, d'un conduit souple ou de tout autre moyen permettant de siphonner le réservoir 2. A cet effet, le dispositif selon l'invention comporte un obturateur 35 qui peut se présenter par exemple sous la forme d'une pièce constituant un ensemble formé de la superposition décalée angulairement d'étoiles de palettes radiales 36 ou de tout autre dispositif, par exemple à chicanes, interdisant, voire rendant difficile, l'introduction d'un moyen de siphonnage du réservoir 2. L'obturateur 35 est conformé de manière à laisser libre un chemin permettant l'introduction du liquide, mais étant beaucoup trop anguleux et complexe pour que l'on parvienne à y insérer un tube ou un autre moyen quelconque de siphonnage. Un exemple de réalisation d'un tel obturateur 35 a été représenté en perspective sur la figure 4.

Dans un mode de réalisation préféré le dispositif anti-pénétration 33 présente un alésage central 37 permettant le passage de la tige de serrage 14. Afin d'empêcher tout accès au contenu du réservoir 2 par ce passage et éventuellement d'assurer l'étanchéité de l'ensemble au liquide, l'accès à la tige de serrage 14 est obturé du côté supérieur par un moyen de bouchage, par exemple un bouchon 38 pouvant être en acier ou une vis inviolable, pouvant avantageusement être monté(e) à force dans l'alésage central 37 du dispositif anti-pénétration 33.

Dans un mode de réalisation préféré le filetage 16 sur lequel est montée la tige de serrage est conformé directement dans et à travers la paroi de fermeture 26 du corps tubulaire plongeur 8 ou dans une pièce solidaire de celle-ci.

Dans un mode de réalisation préféré, le clapet anti-déversement 34 à flotteur est contenu dans l'enveloppe interne 20. Préférentiellement, le flotteur est mobile et monté à libre coulissement dans l'enveloppe interne 20 de façon à venir porter en appui, par exemple de manière étanche, contre une sous-face 39 que présente le dispositif anti-pénétration 33 lors d'une montée de liquide dans l'enveloppe intérieure 20. Ainsi, lorsque le réservoir 2 est plein ou en cours de remplissage, ce clapet anti-déversement 34 à flotteur monté à coulissement libre dans l'enveloppe interne 20 et le long de la tige de serrage 14 vient se plaquer de manière étanche contre la sous-face 39 du dispositif anti-pénétration 33 lors d'une montée de liquide dans l'enveloppe interne 20. On rend impossible ainsi tout débordement de liquide hors du réservoir 2 lors du remplissage et empêche tout déversement de liquide hors du réservoir 2 suite à un refoulement ou autre.

Le dispositif antivol et anti-déversement 1 pour réservoir de liquide 2 selon l'invention a été représenté sur la figure 2 en position fermée. Dans cette position, le tube escamotable de remplissage 22 qui constitue le seul élément mobile du dispositif 1 avec le clapet anti-déversement 34 à flotteur est rentré à l'intérieur de l'ensemble tubulaire. Ses parois externes se trouvent donc en contact contre les parois internes de l'enveloppe externe 19, empêchant ainsi le liquide de s'écouler par les ouvertures existant dans cette enveloppe 19.

En position fermée, la bague inférieure d'appui 31 du tube escamotable de remplissage 22 peut venir appuyer en butée contre une collerette saillante 40 située à l'intérieur de l'enveloppe externe 19 dans sa partie inférieure. Cette butée permet de positionner le tube escamotable de remplissage 22 à une hauteur prédéfinie dans l'ensemble coaxial et d'assurer une étanchéité entre le tube escamotable de remplissage 22 et l'enveloppe externe 19.

Préférentiellement, dans cette position fermée, le tube escamotable de remplissage 22 est presque totalement logé dans l'ensemble tubulaire. Seul le moyen de préhension (non représenté), par exemple sous la forme d'une poignée, fait saillie dans le goulot 6 afin de pouvoir être saisi pour permettre la sortie partielle hors de son logement 21 du tube escamotable de remplissage 22.

Dans un mode de réalisation préféré, le tube escamotable de remplissage 22 est verrouillé en position fermée ou ouverte en le tournant d'un quart de tour. Pour cela, l'homme du métier devra fournir un dispositif adapté, par exemple à came ou à filetage, permettant de verrouiller le tube escamotable de remplissage 22 en position basse ou haute en le faisant simplement tourner d'un quart de tour.

Le dispositif de sécurité antivol et anti-déversement pour réservoir de liquide qui vient d'être décrit présente un moyen d'immobilisation dans le réservoir 2.

Ce moyen d'immobilisation est rendu nécessaire par le caractère d'accessoire de ce dispositif, c'est-à-dire celui d'une pièce montée après la fabrication du réservoir 2.

Bien entendu, dans le cas d'un équipement d'origine, l'immobilisation s'effectuera au moment de la fabrication du réservoir et ceci par les techniques classiques de montage, d'assemblage ou d'intégration.

Ainsi, dans ce cas, le moyen d'immobilisation s'avère inutile car le corps tubulaire sera immobilisé à la fabrication, par exemple par sondage ou autre moyen de solidarisation.

Cette version simplifiée reste dans le cadre de l'idée générale inventive et donc dans la présente définition de la protection.

En se référant à la figure 3 qui représente le dispositif 1 selon l'invention en perspective à l'état partiellement dissocié, nous allons maintenant décrire un exemple de mise en place et d'utilisation d'un dispositif antivol et anti-déversement 1 pour réservoir de liquide 2 selon un mode de réalisation préféré de l'invention.

La mise en place du dispositif 1 selon l'invention s'effectue selon les étapes suivantes :
. retrait du bouchon d'origine du réservoir 2 ;
. introduction du dispositif 1 selon l'invention dans le réservoir 2 sensiblement selon un axe perpendiculaire au plan de l'ouverture 4 du réservoir 2 ;
. positionnement de l'extrémité évasée 10 de l'enveloppe externe 19 en vis-à-vis de la structure intérieure 9 de sous-face de l'orifice de sortie ou du goulot 6 du réservoir 2 ;
. positionnement du patin d'appui et de calage 12 contre le fond 3 du réservoir 2, en vis-à-vis de l'ouverture 4 de celui-ci ;
. serrage par vissage de la tige de serrage 14 pour la mise en pression de l'ensemble tout en vérifiant que l'extrémité évasée 10 de l'enveloppe externe 19 se place contre la structure intérieure 9 de l'orifice de sortie ou du goulot 6 du réservoir 2 ;
. vérification que le dispositif 1 selon l'invention est parfaitement immobilisé dans le réservoir 2 ;
. insertion à force du moyen de bouchage 38 dans l'alésage central 37 du dispositif anti-pénétration 33 ;
. introduction du tube escamotable de remplissage 22 dans l'ensemble si celui-ci est en position sortie ;
. remise en place du bouchon d'origine du réservoir 2.

Une fois mis en place, le dispositif 1 ne peut pas être retiré sans abîmer le réservoir 2. La tige de serrage 14 constitue le seul moyen pour déverrouiller le dispositif 1 et le moyen de bouchage 38 condamne tout accès à celle-ci.

L'utilisation du dispositif 1 selon l'invention lors d'un remplissage du réservoir se fait selon les étapes suivantes :
. retrait du bouchon d'origine du réservoir 2 ;
. déverrouillage du tube escamotable de remplissage 22 par exemple par un quart de tour ;
. relevage du tube escamotable de remplissage 22 hors du dispositif anti-pénétration 1 ;
. remplissage du réservoir 2 avec le pistolet de distribution en position haute dans le tube de remplissage ;
. rentrée du tube escamotable de remplissage 22 dans le dispositif anti-pénétration 1 ;
. verrouillage du tube escamotable de remplissage 22 par exemple par un quart de tour ; et
. remise en place du bouchon d'origine du réservoir 2.

Lors du remplissage du réservoir 2, le tube escamotable de remplissage 22 sert de guide et d'entonnoir pour l'introduction du liquide. Il permet de garder pendant tout le remplissage l'extrémité du pistolet en position haute pour un remplissage à ras bord. En cas de moussage ou de trop plein, la butée du clapet anti-déversement à flotteur 34 contre le dispositif anti-pénétration 33 évite tout débordement et déversement du liquide.

Il est à noter que les éléments constitutifs du dispositif de l'invention 1 doivent être fabriqués dans une matière adaptée. Cette matière doit être suffisamment rigide et résister à l'action du liquide destiné à être contenu dans le réservoir 2. Dans le cas d'un réservoir de carburant, on peut par exemple fabriquer les éléments du dispositif antivol et anti-déversement 1 en acier inoxydable ou en un plastique rigide résistant aux hydrocarbures.

On remarquera que le dispositif 1 selon l'invention, dans son mode de réalisation préféré, répond parfaitement aux exigences citées plus haut.

D'autres modes de réalisation pourront être envisagés par l'homme du métier sans s'écarter du principe général de l'invention.

Ainsi, dans notre invention nous avons décrit un dispositif antivol et anti-déversement de forme préférentiellement cylindrique. Ceci nous a paru plus adapté, en raison par exemple de la forme habituellement cylindrique des ouvertures de réservoir, mais il peut être envisagé d'autres formes adaptées. Ainsi, on peut par exemple utiliser des éléments à section carrée, polygonale, ovale ou autre sans s'écarter du principe général de l'invention.

En outre, on peut également fournir divers perfectionnements au dispositif de l'invention sans pour cela sortir du cadre de la protection définie par les revendications.

On peut par exemple envisager d'adapter un ressort entre le tube escamotable et l'enveloppe cylindrique interne afin d'imprimer une force de rappel en fermeture pour le tube ou au contraire afin d'imprimer une force de poussée faisant sortir le tube escamotable hors du corps tubulaire lors du retrait du bouchon du réservoir.

Il peut également être envisagé d'adapter une jauge au dispositif, par exemple en utilisant le déplacement du flotteur du clapet anti-déversement. On peut aussi adapter un système d'alarme au dispositif de l'invention afin de signaler toute tentative de siphonnage du réservoir.

Enfin, ce dispositif antivol et anti-déversement est conçu pour des réservoirs de liquide mais cette application ne doit pas être restrictive et le dispositif pourra être utilisé dans d'autres circonstances en effectuant les adaptations qui s'imposent et qui seront évidentes pour l'homme du métier. On peut par exemple adapter le dispositif de l'invention à des contenants de fluide, de matière pulvérulente, semi-liquide, visqueuse, pâteuse ou granulaire.

## Revendications

1. Dispositif antivol et anti-déversement (1) pour un réservoir de liquide (2) comprenant un corps tubulaire plongeur (8) introduit dans le réservoir par son orifice de remplissage (7) à goulot (6) présentant une structure intérieure (9) et immobilisé dans un réservoir (2) à fond (3), **caractérisé en ce qu'**il se compose :
. d'un corps tubulaire plongeur (8) calé et maintenu immobilisé en position entre le fond (3) du réservoir (2) et la structure intérieure (9) de l'orifice de sortie ou du goulot (6) par calage d'appui sur le fond (3) du réservoir (2) et contre la structure intérieure (9) de l'orifice de sortie ou du goulot (6) du réservoir (2) ;
. de deux enveloppes coaxiales (19, 20) formant le corps tubulaire plongeur (8) dont une enveloppe interne (20) et une enveloppe externe (19) délimitant entre elles un volume annulaire (21) ;
. d'un tube escamotable de remplissage (22) entre une position haute dans laquelle il fait saillie hors de l'orifice de remplissage et une position basse dans laquelle il se trouve rangé dans le volume annulaire (22) ; et
**en ce que** les enveloppes (19, 20) présentent des ouvertures (23, 24) afin de laisser passer le liquide vers le réservoir (2) lors du remplissage et sont réunies à l'une de leur extrémité par une paroi de fermeture d'extrémité (26) ; et
**en ce que** l'enveloppe interne (20) renferme un dispositif anti-pénétration (33) et un clapet anti-déversement (34).

2. Dispositif antivol et anti-déversement selon l'une quelconque des revendications précédentes, **caractérisé en ce que** les enveloppes coaxiales (19, 20) sont de forme cylindrique.

3. Dispositif antivol et anti-déversement selon l'une quelconque des revendications précédentes, **caractérisé en ce que** le tube escamotable de remplissage (22) est monté coulissant dans le volume intérieur (21) délimité entre les enveloppes interne (20) et externe (19).

4. Dispositif antivol et anti-déversement selon l'une quelconque des revendications précédentes, **caractérisé en ce que** le clapet anti-déversement (34) est à flotteur mobile dans l'enveloppe interne (20).

5. Dispositif antivol et anti-déversement selon la revendication précédente, **caractérisé en ce que** le flotteur du dispositif ainti-déversement (34) est monté à coulissement libre dans l'enveloppe interne (20) de façon à venir porter en appui, de manière étanche, contre la partie inférieure (39) du dispositif anti-pénétration (33) lors d'une montée de liquide dans l'enveloppe intérieure (20)

6. Dispositif antivol et anti-déversement selon la revendication précédente, **caractérisé en ce que** l'enveloppe interne (20) comporte à sa partie supérieure un rebord d'appui (29) contre lequel le tube escamotable de remplissage (22) vient buter, de manière étanche, lorsqu'il est en position relevée.

7. Dispositif antivol et anti-déversement selon l'une quelconque des revendications précédentes, **caractérisé en ce que** le corps tubulaire plongeur (8) est en appui sur la partie intérieure du goulot de sortie du réservoir et en appui d'immobilisation sur le fond du réservoir par un patin ou sabot d'appui et de calage (12), cet appui étant permanent et provoqué par la réaction d'appui et de calage du patin ou sabot d'appui et de calage (12) sur le fond (3) du réservoir (2) à l'aide d'une tige de serrage (14) vissée dans un filetage (16) solidaire du corps tubulaire plongeur (8) qui plaque l'extrémité supérieure évasée (10) de l'enveloppe externe (19) contre la structure intérieure (9) de l'orifice de sortie ou du goulot (6) du réservoir (2).

8. Dispositif antivol et anti-déversement selon l'une quelconque des revendications précédentes, **caractérisé en ce que** l'enveloppe externe (19) présente une extrémité supérieure évasée (10) en appui d'encastrement contre la structure intérieure (9) de sous-face de l'orifice de sortie (7) ou du goulot (6) du réservoir (2).

9. Dispositif antivol et anti-déversement selon la revendication 7, **caractérisé en ce que** le filetage (16) sur lequel est montée la tige de serrage (14) est conformé directement ou dans une pièce solidaire de la paroi de fermeture (26) du corps tubulaire plongeur (8).

10. Dispositif antivol et anti-déversement selon la revendication précédente, **caractérisé en ce que** le dispositif anti-pénétration (33) présente un alésage central (37) prévu dans le corps pour le passage de la tige de serrage (14), cet alésage étant obturé par un moyen de bouchage (38), monté(e) à force dans l'alésage central (37) du dispositif anti-pénétration (33).

11. Dispositif antivol et anti-déversement selon l'une quelconque des revendications précédentes, **caractérisé en ce que** le patin ou sabot d'appui et de calage (12) est relié de façon articulée à la tige de serrage (14).

12. Dispositif antivol et anti-déversement selon l'une quelconque des revendications précédentes, **caractérisé en ce que** la paroi de fermeture (26) présente une forme adaptée pour s'ajuster sur la partie supérieure du patin ou sabot d'appui et de calage (12).

13. Dispositif antivol et anti-déversement selon la revendication 3, **caractérisé en ce que** le tube escamotable de remplissage (22) comporte un moyen de préhension, par exemple sous la forme d'une poignée et un moyen de verrouillage en position haute.

14. Dispositif antivol et anti-déversement selon la revendication 1 ou 2, **caractérisé en ce que** le corps tubulaire plongeur (8) est monté d'origine solidarisé à la structure du réservoir (2) lors de la construction de celui-ci.
